# EUROPEAN PATENT SPECIFICATION

(11) **EP 3 930 025 B1**
(45) Date of publication and mention of the grant of the patent: **17.07.2024**
(21) Application number: 20866471.4
(22) Date of filing: 25.07.2020
(51) Int. Cl.: H01M 50/291, H01M 50/209, H01M 50/242, H01M 50/293, H01M 10/658, H01M 10/04

(54) **BATTERY MODULE, BATTERY PACK, AND VEHICLE**
BATTERIEMODUL, BATTERIEPACK UND FAHRZEUG
MODULE DE BATTERIES, BLOC-BATTERIE ET VÉHICULE

(30) Priority: 20.09.2019 CN 201921576330 U
(43) Date of publication of application: 29.12.2021
(73) Proprietor: Contemporary Amperex Technology Co., Limited, Ningde, Fujian 352100 (CN)
(72) Inventor: DAI, Xiaoshan, Ningde, Fujian 352100 (CN); XU, Shoujiang, Ningde, Fujian 352100 (CN)
(74) Representative: Herrero & Asociados, S.L.
(86) International application number: PCT/CN2020/104675
(87) International publication number: WO 2021/052004

(56) References cited:
- EP-A1- 2 200 112
- CN-A- 101 809 781
- CN-A- 106 531 914
- CN-A- 106 711 363
- CN-A- 107 302 070
- CN-U- 204 885 244
- CN-U- 207 743 362
- CN-U- 208 955 063
- CN-U- 210 576 107
- JP-A- 2015 064 971
- JP-A- 2015 064 971
- US-A1- 2014 120 391

## Description

### TECHNICAL FIELD

The present application relates to the technical field of batteries, and in particular, relates to a battery module, a battery pack and a vehicle.

### BACKGROUND

A battery module usually includes a plurality of batteries grouped together. In a grouping technology, in order to alleviate an impact of an expansion force of a battery on a battery life, a buffer element is usually arranged between two adjacent batteries. However, the existing buffer element is usually a flat-plate structure, thus it has the following problems in a grouping process: (1) a positioning installation with the corresponding battery cannot be implemented, resulting in a low grouping efficiency; (2) the buffer element is easy to install improperly (that is, there is a certain misalignment between the buffer element and the corresponding battery), which affects an absorption effect of the buffer element on the expansion force of the battery.

EP2200112A1 discloses a battery pack formed by arranging a plurality of unit batteries, it is possible to maintain safety and efficiency even after a long use. The battery pack includes: a plurality of unit batteries each having a rectangular-solid sealed metal unit battery case and two voltage terminals protruding from a terminal surface of the unit battery case; a spacer arranged between two main surfaces of adjacent unit batteries opposing to each other so as to maintain a gap between the main surfaces; and a connection portion which electrically connects the voltage terminals of different unit batteries. The spacer has a plurality of protrusions for supporting the corner portions of the unit battery cases and through holes formed at positions opposing to the main surfaces which can receive expanded portions when the main surfaces of the unit battery cases are expanded by inner pressure of the unit battery cases.

CN107302070A discloses a plug-in series battery bracket and a battery module. The plug-in series battery bracket comprises two end part brackets, and at least one middle bracket, wherein one end part bracket, the middle bracket and the other end bracket are sequentially assembled in a plug-in manner; battery cores are arranged between the end part brackets and the middle bracket or between two middle brackets separately; each end part bracket comprises a first baffle plate, a first plug connector, a second plug connector and a first bottom baffle edge; each first plug connector is arranged on the edge of the corresponding first baffle plate; each middle bracket comprises a second baffle plate, a third plug connector and a second bottom baffle edge; each third plug connector is arranged on the edge of the corresponding second baffle plate; and the first plug connectors and the second plug connectors are assembled with the corresponding third plug connectors in a plug manner separately. The invention further discloses a battery module using the battery bracket. The plug-in series battery bracket has the advantages that sufficient expansion clearance and breathing distance between the battery cores are ensured, heat dissipation between the battery cores is ensured, the plug-in series battery bracket is flexible to assemble, high in universality and good in heat insulation effect between the battery cores, and the security of the battery module is ensured.

CN106531914A discloses a square cell module including a plurality of square cell monomers, a plurality of cell electrically conductive connection pieces and a module frame. The square cell module is characterized in that the module frame includes two module end plates, two module fixing steel angles and a module top beam; the module end plates are square flat plates, and two corners of the lower end of each square flat plate and the middle part of the upper end of each square flat plate are each provided with an end plate riveting through hole; end parts of two ends of each module fixing steel angle are each provided with a steel angle riveting through hole; end parts of two ends of the module top beam are each provided with a top beam riveting through hole; the module fixing steel angles and the module top beam are respectively connected with the module end plates in a riveting mode, and thus the plurality of square cell monomers are accommodated and fixed. The square cell module provided by the invention has the advantages of simple structure, high space utilization rate, high universality, and convenient installation and transport, and is suitable for scaling and mechanized production; and the grouping production efficiency of the cell module can be improved, and the production cost is reduced.

CN106711363A discloses a battery grouping framework including a battery spacing plate, a bottom plate, a front vertical plate, a rear vertical plate and an upper cover plate; the battery spacing plate is a square flat plate; the bottom plate, the front vertical plate, the rear vertical plate and the upper cover plate form vertical T-shaped structures with the battery spacing plate respectively and are distributed at four side faces of the battery spacing plate; the end face of the upper cover plate is provided with a groove sunken from the edge to the interior; the bottom plate and the upper cover plate are provided with splicing grooves and splicing bosses respectively. The voltage and capacity of a grouped battery module are changed by freely changing the number of battery monomers, the convenience of the battery grouping is increased, the battery information collection wiring harness arrangement is specified, the assembly process of the battery module is simplified, the battery grouping framework is suitable for large-scale production, and the cost of manufacturing of a battery system is effectively reduced. In addition, the connected grouped battery system has excellent heat dissipation performance.

US 2014/120391 A1 discloses a battery module according to the preamble of claim 1.

### SUMMARY

The invention is set out in the appended set of claims.

### BRIEF DESCRIPTION OF DRAWINGS

FIG. 1 is an exploded view of a battery module of the present application.
FIG. 2 is an assembly diagram of FIG. 1.
FIG. 3 is a sectional view before a buffer element and a corresponding battery are assembled in FIG. 1.
FIG. 4 is a modified example of a buffer element in 3.
FIG. 5 is a schematic diagram of an internal structure of a battery in a battery module.
FIG. 6 is a perspective view of a buffer element in FIG. 1.
FIG. 7 is a front view of FIG. 6.
FIG. 8 is a schematic diagram of a positional relationship between a buffer element and a bonding adhesive on a surface of a battery.
FIG. 9 is a modified example of FIG. 6.
FIG. 10 is another modified example of FIG. 6.
FIG. 11 is yet another modified example of FIG. 6.
FIG. 12 is an exploded view of a battery.
FIG. 13 is a schematic diagram of an outline of an electrode assembly in FIG. 12.

Reference signs are explained as follows:
1 battery
   11 electrode assembly
      111 body portion
      112 first corner portion
      113 second corner portion
      11a first electrode sheet
      11b second electrode sheet
      11c isolation film
   12 housing
   13 top cover assembly
      13a top cover plate
      13b electrode terminal
2 buffer element
   21 main body portion
      21A first surface
      21B second surface
      21C third surface
      21D fourth surface
   22 first limiting portion
   23 second limiting portion
   24 third limiting portion
3 insulation element
4 upper cover plate
5 end plate
T bonding adhesive
S opening
X first direction
Y second direction Z third direction

### DESCRIPTION OF EMBODIMENTS

To make the objectives, technical solutions, and advantages of the present application clearer and more comprehensible, the present application will be further described below in detail with reference to the accompanying drawings and embodiments. It should be understood that the specific embodiments described herein are merely used to explain the present application, but are not intended to limit the present application.

In the description of the present application, unless otherwise specified and limited explicitly, the terms "first", "second" and "third" are merely intended for a purpose of description, and may not be understood as an indication or implication of relative importance. The term "a plurality of" refers to more than two (including two). Unless otherwise specified or illustrated, the term "connection" should be understood broadly, for example, the "connection" may either be a fixed connection, or a detachable connection, or an integrated connection, or an electrical connection, or a signal connection; and the "connection" may either be a direct connection, or an indirect connection through an intermediary. Those of ordinary skill in the art may appreciate the specific meanings of the foregoing terms in the present application according to specific conditions.

In the description of the specification, it should be understood that the terms representing directions such as "up" and "down" described in the embodiments of the present application are described from the angles shown in the accompanying drawings, and should not be understood as limitation on the embodiments of the present application. The present application will be further described below in detail through the specific embodiments with reference to the accompanying drawings.

A vehicle of the present application includes a vehicle body, a battery pack and a power source. Both the battery pack and the power source are installed on the vehicle body, and the battery pack is electrically connected to the power source to supply electricity to the power source. Where the vehicle may be a new energy automobile. In one implementation manner, the new energy automobile may be a pure electric automobile, a hybrid automobile or an extended-range automobile. Preferably, the battery pack may be horizontally arranged at a bottom of the vehicle body.

The battery pack includes a box body and a battery module. The number of a battery module 1 may be one or more, and each battery module 1 may be fixed to the box body by a corresponding fastener (such as a bolt), or each battery module 1 may be fixed to the box body by a bonding method.

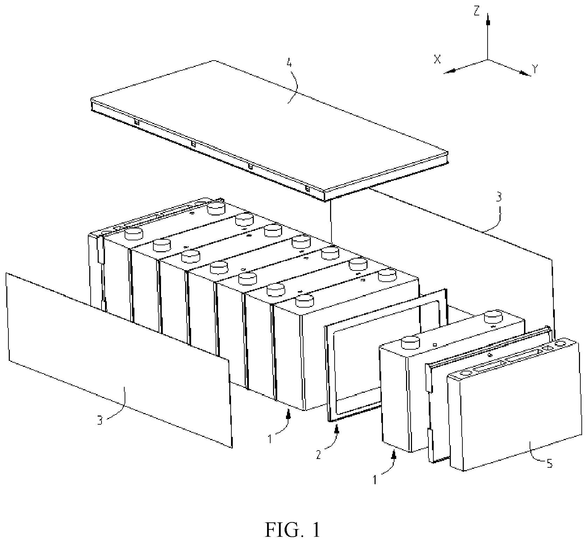

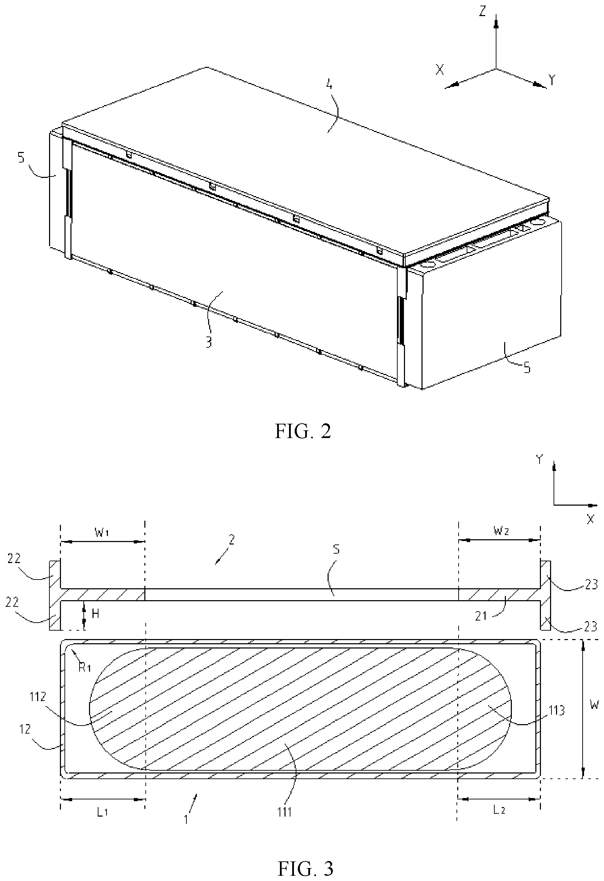

Referring to FIG. 1 and FIG. 2, the battery module may include a plurality of batteries 1, a buffer element 2, an insulation element 3, an upper cover plate 4 and an end plate 5.

The plurality of batteries 1 are arranged side by side along a second direction Y, and each battery 1 includes an electrode assembly 11, a housing 12, a top cover assembly 13 and an electrolyte accommodated in the housing 12.

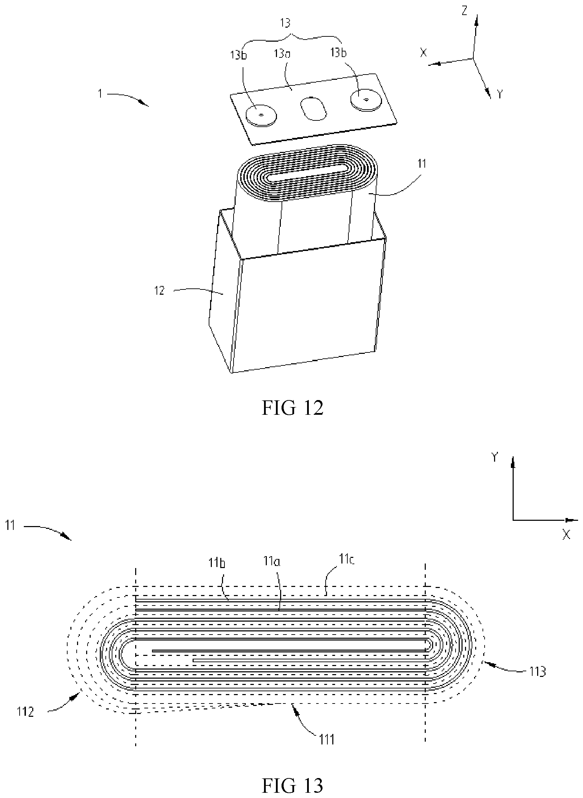

The electrode assembly 11 is accommodated in the housing 12, and for a composition structure of the electrode assembly 11, the electrode assembly 11 may include a first electrode sheet 11a, a second electrode sheet 12b, and an isolation film 11c arranged between the first electrode sheet 11a and the second electrode sheet 11b. In one embodiment, referring to FIG. 12 and FIG. 13, the electrode assembly 11 may be a rolled electrode assembly. In one implementation manner, the first electrode sheet 11a, the second electrode sheet 11b and the isolation film 11c are all in banded structures, the first electrode sheet 11a, the second electrode sheet 11b and the isolation film 11c are stacked in sequence and are rolled more than two turns to form the electrode assembly 11, and the electrode assembly 11 is in a flat shape. When producing the electrode assembly 11, the electrode assembly 11 may be firstly rolled into a hollow cylindrical structure, and then flattened into a flat shape after being rolled.

For different parts of the electrode assembly 11 in a first direction X, referring to FIG. 3 and FIG. 13, the electrode assembly 11 may have a body portion 111, a first corner portion 112 and a second corner portion 113, the body portion 111 extends along the first direction X, the first corner portion 112 and the second corner portion 113 are located at both sides of the body portion 111 in the first direction X, and the first corner portion 112 and the second corner portion 113 are connected to the body portion 111 and protrude from the body portion 111 in the first direction X, where an outer surface of the first corner portion 112 and an outer surface of the second corner portion 113 are formed in an arc shape.

The housing 12 can be made of metal materials or composite materials. For example, in one embodiment, the whole housing 12 is made of metal materials such aluminum, aluminum alloy or nickel-plated steel. Or in another embodiment, the housing 12 may also include a base and an insulation layer. The base is made of metal materials such aluminum, aluminum alloy or nickel-plated steel, and the insulation layer may be arranged on an outer surface of the base by coating, bonding or the like. In this case, the metal base may ensure strength of the housing 12, and the insulation layer may improve an insulation property of the housing 12.

Referring to FIG. 12, the housing 12 may have a hexahedral shape or another shape. The housing 12 has an opening, and the electrode assembly 11 may be disposed in the housing 12 through the opening.

Referring to FIG. 12, the top cover assembly 13 may include a top cover plate 13a and electrode terminals 13b, and the electrode terminals 13b are arranged on the top cover plate 13a. The top cover plate 13a may be made of metal materials such as aluminum or aluminum alloy, and a size of the top cover plate 13a is adapted to a size of the opening of the housing 12. The top cover plate 13a may be connected to the housing 12 by welding and cover the opening of the housing 12, thereby sealing the electrode assembly 11 and the electrolyte in the housing 12.

The electrode terminals 13b may be fixed to the top cover plate 13a by welding, riveting or the like. There are two electrode terminals 13b, and they are electrically connected to the first electrode sheet 11a and the second electrode sheet 11b, respectively.

Referring to FIG. 1, the buffer element 2 is arranged between two adjacent batteries 1. In one implementation manner, the buffer element 2 may be made of hard materials (such as PC, PP and the like). At this time, the buffer element 2 is incompressible, so that an assembly preload and a reserved expansion gap between each two adjacent batteries 1 may be ensured to be consistent, thereby improving a reliability of a module structure during a long-term use.

Referring to FIGS. 3 to 11, the buffer element 2 may have a main body portion 21, a first limiting portion 22 and a second limiting portion 23. According to actual situations, the buffer element 2 may also have a third limiting portion 24.

The main body portion 21 of the buffer element 2 is provided with an opening S penetratingly along the second direction Y to form a loop structure. The first limiting portion 22 and the second limiting portion 23 are located at both ends of the main body portion 21 in the first direction X and are arranged at intervals from the opening S (that is, a distance between the first limiting portion 22 and the second limiting 23 in the first direction X is greater than a size of the opening S in the first direction), and the first limiting portion 22 and the second limiting portion 23 are connected to the main body portion 21 and protrude from the main body portion 21 in the second direction Y When the battery module is grouped, the housing 12 of a battery 1 faces the opening S in the second direction Y and abuts against the main body portion 21 of the buffer element 2, and is located between the first limiting portion 22 and the second limiting portion 23 in the first direction X.

In a grouping process of the battery module, the main body portion 21 of the buffer element 2, the first limiting portion 22 and the second limiting portion 23 together limit an installation position of the battery 1, thereby improving a grouping efficiency of the battery module. And during use of the battery module, the opening S of the buffer element 2 faces the battery 1 in the second direction Y, so that the opening S may absorb expansion and deformation generated by the battery 1 in time, and based on an arrangement of the first limiting portion 22 and the second limiting portion 23, the battery 1 may not be misaligned relative to the buffer element 2 in the first direction X, which improves an absorption effect of the buffer element 2 on the expansion and deformation of the battery 1, thereby increasing a service life of the battery module.

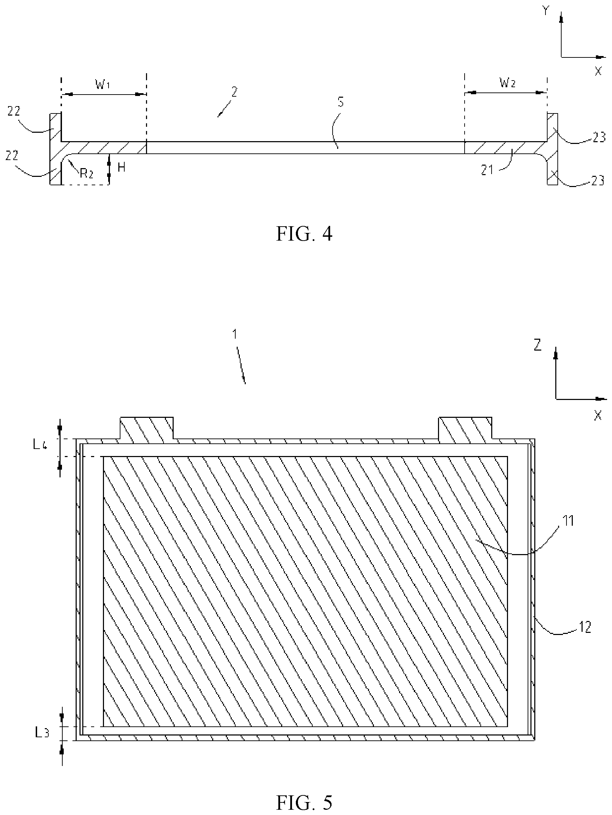

The first limiting portion 22 may be formed at one side or both sides of the main body portion 21 in the second direction Y (as shown in FIG. 3 and FIG. 4). Accordingly, the second limiting portion 23 may be formed at one side or both sides of the main body portion 21 in the second direction Y (as shown in FIG. 3 and FIG. 4).

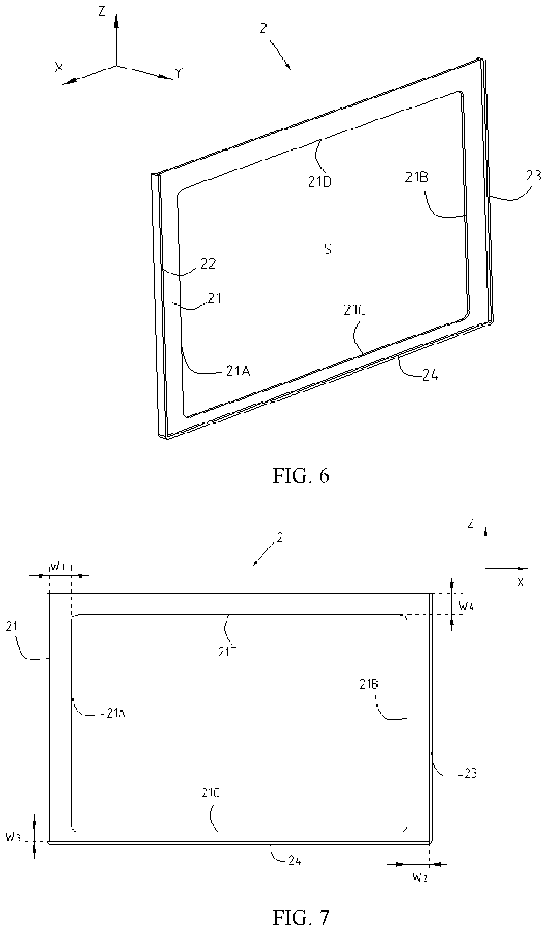

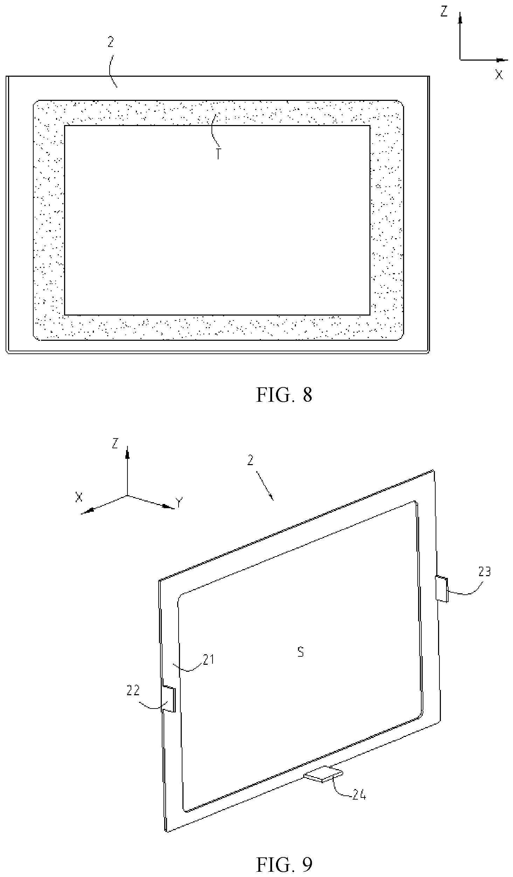

In order to ensure strength of the first limiting portion 22, referring to FIG. 6 and FIG. 7, the first limiting portion 22 may span the entire main body portion 21 in a third direction Z, that is, the first limiting portion 22 extends from one end of the main body portion 21 to the other end in the third direction Z. Of course, the first limiting portion 22 may also span a part of the main body portion 21 in the third direction Z, which helps to save materials of the buffer element 2 at this time, thereby reducing costs. In one implementation manner, the first limiting portion 22 is arranged in the middle of the main body portion 21 in the third direction Z (as shown in FIG. 9).

Accordingly, referring to FIG. 6 and FIG. 7, the second limiting portion 23 spans the entire main body portion 21 in the third direction Z, that is, the second limiting portion 23 extends from one end of the main body portion 21 to the other end in the third direction Z. Of course, the second limiting portion 23 may also span the part of the main body portion 21 in the third direction Z. At this time, in one implementation manner, the second limiting portion 23 is arranged in the middle of the main body portion 21 in the third direction Z (as shown in FIG. 9).

When the first limiting portion 22 spans the part of the main body portion 21 in the third direction Z and the second limiting portion 23 also spans the part of the main body portion 21 in the third direction Z, the first limiting portion 22 and the second limiting portion 23 may be arranged to be diametrically opposite to each other (as shown in FIG. 9) or arranged in a misalignment manner in the third direction Z. It should be noted that the "diametrically opposite arrangement" means that a projection of the first limiting portion 22 in the first direction X and a projection of the second limiting portion 23 in the first direction X overlap, and the "misaligning arrangement" means that the projection of the first limiting portion 22 in the first direction X and the projection of the second limiting portion 23 in the first direction X partially overlap or do not overlap.

Referring to FIGS. 6 to 11, the third limiting portion 24 is connected to the main body portion 21 and protrudes from the main body portion 21 in the second direction Y, and the third limiting portion 24 supports the corresponding battery 1 in the third direction Z. Since the first limiting portion 22 and the second limiting portion 23 of the buffer element 2 together limit a position of the battery 1 in the first direction X, and the third limiting portion 24 limits a position of the battery 1 in the third direction Z, when the battery module is grouped, it is only necessary to dispose the battery 1 in an area formed by the third limiting portion 24, the first limiting portion 22 and the second limiting portion 23, thereby improving the grouping efficiency of the battery module.

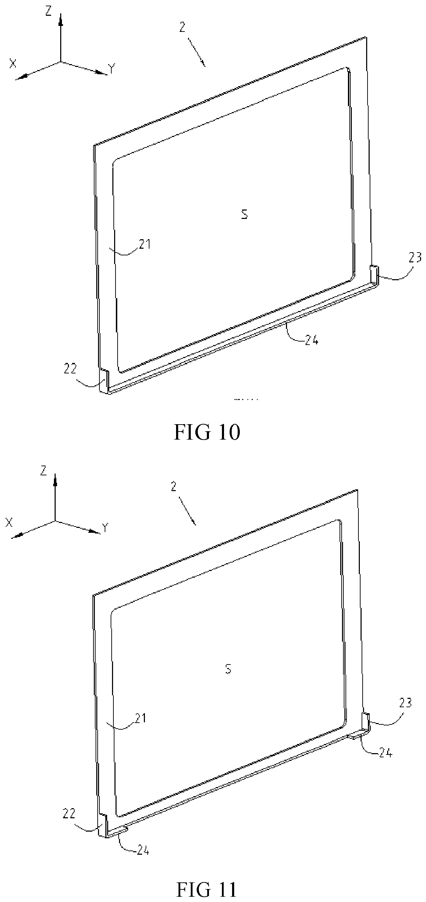

In order to ensure strength of the third limiting portion 24, the third limiting portion 24 may span (that is, the third limiting portion 24 extends from one end of the main body portion 21 to the other end in the first direction X, as shown in FIG. 10) the entire main body portion 21 in the first direction X and is connected to the first limiting portion 22 and the second limiting portion 23. Of course, in order to save the materials of the buffer element 2 to reduce the costs, the third limiting portion 24 may also span the part of the main body portion 21 in the first direction X. In one implementation manner, the third limiting portion 24 is arranged in the middle of the main body portion 21 in the first direction X. Referring to FIG. 11, the third limiting portion 24 may also be formed at both ends of the main body portion 21 in the first direction X, and the first limiting portion 22 and the second limiting portion 23 are connected to a corresponding third limiting portion 24, respectively.

Referring to FIG. 1 and FIG. 2, the insulation element 3 extends along the second direction Y and is arranged at both sides of the plurality of the batteries 1 in the first direction X, and the insulation element 3 is bonded to the plurality of the batteries 1 to insulate the plurality of the batteries 1. In one implementation manner, a surface of the battery 1 is further provided with a protective film, and the insulation element 3 is bonded to the protective film of surfaces of the plurality of the batteries 1.

Referring to FIG. 3, a size of the battery 1 in the second direction Y is *W*, a size of the first limiting portion 22 in the second direction Y is *H,* and *H* ≤ *W* / 20 . This is because when *H* > *W* / 20, the size *H* of the first limiting portion 22 in the second direction Y is too large, then a part of a side of the battery 1 corresponding to the first limiting portion 22 is too large, and a part of the side of the battery 1 that may be bonded to the insulation element 3 is shorter, thereby resulting in that a bonding effect between the insulation element 3 and the battery 1 is poor and even the insulation element 3 may not be bonded to the battery 1, further resulting in that the protective film of the surface of the battery 1 is worn, and resulting in an insulation failure of the battery 1 accordingly.

Referring to FIG. 3, the housing 12 of the battery 1 is formed with a first fillet, and a radius of the first fillet is *R*₁, a size of the first limiting portion 22 in the second direction Y is *H,* and *H* ≥ *R*₁. This is because when *H* < *R*₁, a size *H* of the first limiting portion 22 in the second direction Y is too small, so that when the battery module is subjected to external shock and vibration, the battery 1 is likely to fall out between the first limiting portion 22 and the second limiting portion 23, which may not guarantee an limiting effect of the battery module on the battery 1 during the long-term use.

Referring to FIG. 4, a junction between the first limiting portion 22 and the main body portion 21 is formed with a second fillet, and a radius of the second fillet is *R*₂, *R*₁ ≤ *R*₂, and at this time, assembly between the battery 1 and the buffer element 2 is facilitated. Of course, a junction between the first limiting portion 22 and the main body portion 21 may also be formed into a right angle.

Inside the housing 12 of the battery 1, in order to alleviate expansion and deformation generated by the electrode assembly 11, a certain expansion space is reserved between the electrode assembly 11 and the corresponding housing 12, that is, a distance between a junction of the first corner portion 112 and the body portion 111 of the electrode assembly 11 and an outer side surface corresponding to the housing 12 in the first direction X is *L*₁, a distance between a junction of the second corner portion 113 and the body portion 111 and the outer side surface corresponding to the housing 12 in the first direction X is *L*₂, a distance between the body portion 111 and a lower surface of the housing 12 in the third direction Z is *L*₃, and a distance between the body portion 111 and an upper surface of the housing 12 in the third direction Z is *L*₄, as shown in FIG. 3 and FIG. 5.

Referring to FIG. 6 and FIG. 7, the main body portion 21 of the buffer element 2 has an inner peripheral surface enclosing the opening S, and the inner peripheral surface includes a first surface 21A, a second surface 21B, a third surface 21C and a fourth surface 21D, and the first surface 21A and the second surface 21B are arranged oppositely in the first direction X, and the third surface 21C and the fourth surface 21D are arranged oppositely in the third direction Z.

The first surface 21A is arranged close to the first limiting portion 22 and a distance between the first surface 21A and the first limiting portion 22 in the first direction X is *W*₁, the second surface 21B is arranged close to the second limiting portion 23 and a distance between the second surface 21B and the second limiting portion 23 in the first direction X is *W*₂, as shown in FIG. 3 and FIG. 7. During an expansion and deformation process of the electrode assembly 11, in order to prevent an expansion force generated by the electrode assembly 11 and the main body portion 21 of the buffer element 2 from being pressed against each other, *W*₁ ≤ *L*₁, *W*₂ ≤ *L*₂ (that is, the whole electrode assembly 11 is located inside the opening S in the first direction X), thereby avoiding a damage to the electrode assembly 11 due to stress concentration.

The third surface 21C is arranged close to the third limiting portion 24 and a distance between the third surface 21C and the third limiting portion 24 in the third direction Z is *W*₃, a distance between the fourth surface 21D and an upper surface of the main body portion 21 in the third direction Z is *W*₄, as shown in FIG. 7. During the expansion and deformation process of the electrode assembly 11, in order to prevent the expansion force generated by the electrode assembly 11 and the main body portion 21 of the buffer element 2 from being pressed against each other, *W₃* ≤ *L*₃, *W*₄ ≤ *L*₄ (that is, the whole electrode assembly 11 is located inside the opening S in the third direction Z), thereby avoiding the damage to the electrode assembly 11 due to the stress concentration.

A surface of each battery 1 facing the opening S is also provided with a bonding adhesive T, and two adjacent batteries 1 are connected together through the corresponding bonding adhesive T. In order to prevent the battery 1 from causing a bonding failure under an action of an expansion force, the bonding adhesive T of the surface of the battery 1 is located inside the main body portion 21 and is arranged close to the main body portion 21. At this time, the bonding adhesive T is formed into the loop structure, as shown in FIG. 8. In addition, according to requirements of the battery module for a bonding strength between the two adjacent batteries 1, a width of the bonding adhesive T in a circumferential direction may be selected between 5 millimeters (mm) and 15 millimeters (mm).

## Claims

1. A battery module, comprising a plurality of batteries (1), a buffer element (2) and an insulation element (3);
the plurality of batteries (1) are arranged side by side along a second direction (Y);
the buffer element (2) is arranged between two adjacent batteries (1) and has a main body portion (21), a first limiting portion (22) and a second limiting portion (23);
the main body portion (21) is provided with an opening (S) penetratingly along the second direction (Y), the first limiting portion (22) and the second limiting portion (23) are located at both ends of the main body portion (21) in a first direction (X), respectively, and are arranged at intervals from the opening (S), and the first limiting portion (22) and the second limiting portion (23) are connected to the main body portion (21) and protrude from the main body portion (21) in the second direction (Y); and
a battery (1) faces the opening (S) in the second direction (Y) and abuts against the main body portion (21), and the battery (1) is located between the first limiting portion (22) and the second limiting portion (23) in the first direction (X);
**characterized in that**,
the insulation element (3) is arranged at both sides of the plurality of the batteries (1) in the first direction (X) and is bonded to the plurality of the batteries (1); and
a size of the battery (1) in the second direction (Y) is *W*, a size of the first limiting portion (22) in the second direction (Y) is *H,* and *H* ≤ *W* / 20.

2. The battery module according to claim 1, wherein
the first limiting portion (22) spans the entire main body portion (21) in a third direction (Z); and/or
the second limiting portion (23) spans the entire main body portion (21) in the third direction (Z).

3. The battery module according to any one of claims 1-2, wherein the first limiting portion (22) and the second limiting portion (23) are arranged to be diametrically opposite to each other or arranged in a misalignment manner in the third direction (Z).

4. The battery module according to any one of claims 1-3, wherein the buffer element (2) further has a third limiting portion (24), the third limiting portion (24) is connected to the main body portion (21) and protrudes from the main body portion (21) in the second direction (Y), and the third limiting portion (24) supports the corresponding battery (1) in the third direction (Z).

5. The battery module according to claim 4, wherein
the third limiting portion (24) spans the entire main body portion (21) in the first direction (X) and is connected to the first limiting portion (22) and the second limiting portion (23); or
the third limiting portion (24) is formed at both ends of the main body portion (24) in the first direction (X), and the first limiting portion (22) and the second limiting portion (23) are connected to a corresponding third limiting portion (24), respectively.

6. The battery module according to any one of claims 1-5, wherein
the battery (1) comprises an electrode assembly (11) and a housing (12) accommodating the electrode assembly (11);
the housing (12) is formed with a first fillet, and a radius of the first fillet is *R*₁; and
a size of the first limiting portion (22) in the second direction (Y) is *H*, and *R*₁ ≤ *H*.

7. The battery module according to claim 6, wherein a junction between the first limiting portion (22) and the main body portion (21) is formed with a second fillet, and a radius of the second fillet is *R*₂, and *R*₁ ≤ *R*₂.

8. The battery module according to any one of claims 4-7, wherein
the battery (1) comprises the electrode assembly (11) and the housing (12) accommodating the electrode assembly (11);
the electrode assembly (11) has a body portion (111), a first corner portion (112) and a second corner portion (113), the first corner portion (112) and the second corner portion (113) are located at both sides of the body portion (111) in the first direction (X), respectively, and the first corner portion (112) and the second corner portion (113) are connected to the body portion (111) and protrude from the body portion (111) in the first direction (X) ;
a distance between a junction of the first corner portion (112) and the body portion (111) and an outer side surface corresponding to the housing (12) in the first direction (X) is *L*_{1,} and a distance between a junction of the second corner portion (113) and the body portion (111) and the outer side surface corresponding to the housing (12) in the first direction (X) is *L*₂;
the main body portion (21) of the buffer element (2) has an inner peripheral surface enclosing the opening (S), and the inner peripheral surface comprises a first surface (21A) and a second surface (21B), and the first surface (21A) and the second surface (21B) are arranged oppositely in the first direction (X); and
the first surface (21A) is close to the first limiting portion (22) and a distance between the first surface (21A) and the first limiting portion (22) in the first direction (X) is *W*₁, the second surface (21B) is close to the second limiting portion (23) and a distance between the second surface (21B) and the second limiting portion (23) in the first direction (X) is *W*₂, and *W*₁ ≤ *L*₁*, W*₂ ≤ *L*₂.

9. The battery module according to claim 8, wherein
a distance between the body portion (111) and a lower surface of the housing (12) in the third direction (Z) is *L*₃, and a distance between the body portion (111) and an upper surface of the housing (12) in the third direction (Z) is *L*₄;
the inner peripheral surface further comprises a third surface (21C) and a fourth surface (21D), and the third surface (21C) and the fourth surface (21D) are arranged oppositely in the third direction (Z); and
the third surface (21C) is close to the third limiting portion (24) and a distance between the third surface (21C) and the third limiting portion (24) in the third direction (Z) is *W*₃, a distance between the fourth surface (21D) and an upper surface of the main body portion (21) in the third direction (Z) is *W*₄, and *W*₃ ≤ *L*₃, *W*₄ ≤ *L*₄.

10. The battery module according to any one of claims 6-9, wherein the electrode assembly (11) is a rolled electrode assembly.

11. The battery module according to claim 1, wherein the buffer element (2) is made of a hard material.

12. The battery module according to claim 1, wherein a surface of each battery (1) facing the opening (S) is provided with a bonding adhesive (T), and the bonding adhesive (T) is located at an inner side of the main body portion (21) and is arranged close to the main body portion (21).

13. A battery pack comprising a box body and the battery module according to any one of claims 1-12.

14. A vehicle comprising the battery module according to any one of claims 1-12, and the battery module is configured to supply electric energy to the vehicle.

## Patentansprüche

1. Batteriemodul, umfassend mehrere Batterien (1), ein Pufferelement (2) und ein Isolationselement (3);
wobei die mehreren Batterien (1) nebeneinander entlang einer zweiten Richtung (Y) angeordnet sind;
wobei das Pufferelement (2) zwischen zwei angrenzenden Batterien (1) angeordnet ist und einen Hauptkörperteil (21), einen ersten Begrenzungsteil (22) und einen zweiten Begrenzungsteil (23) aufweist;
wobei der Hauptkörperteil (21) mit einer Öffnung (S) versehen ist, die diesen entlang einer zweiten Richtung (Y) durchdringt, wobei der erste Begrenzungsteil (22) und der zweite Begrenzungsteil (23) entsprechend an beiden Enden des Hauptkörperteils (21) in einer ersten Richtung (X) befindlich sind und in Intervallen von der Öffnung (S) angeordnet sind, und wobei der erste Begrenzungsteil (22) und der zweite Begrenzungsteil (23) mit dem Hauptkörperteil (21) verbunden sind und aus dem Hauptkörperteil (21) in der zweiten Richtung (Y) herausragen; und
wobei eine Batterie (1) in der zweiten Richtung (Y) zur Öffnung (S) zeigt und am Hauptkörperteil (21) anliegt, und wobei die Batterie (1) zwischen dem ersten Begrenzungsteil (22) und dem zweiten Begrenzungsteil (23) in der ersten Richtung (X) befindlich ist;
**dadurch gekennzeichnet, dass**
das Isolationselement (3) auf beiden Seiten der mehreren Batterien (1) in der ersten Richtung (X) angeordnet ist und mit den mehreren Batterien (1) verbunden ist; und
eine Größe der Batterie (1) in der zweiten Richtung (Y) *W* ist, eine Größe des ersten Begrenzungsteils (22) in der zweiten Richtung (Y) *H* ist und *H* ≤ *W* /20.

2. Batteriemodul nach Anspruch 1, wobei
der erste Begrenzungsteil (22) den gesamten Hauptkörperteil (21) in einer dritten Richtung (Z) überspannt; und/oder
der zweite Begrenzungsteil (23) den gesamten Hauptkörperteil (21) in der dritten Richtung (Z) überspannt.

3. Batteriemodul nach einem der Ansprüche 1-2, wobei der erste Begrenzungsteil (22) und der zweite Begrenzungsteil (23) so angeordnet sind, dass sie einander diametral gegenüberliegen, oder in einer Fehlausrichtungsweise in der dritten Richtung (Z) angeordnet sind.

4. Batteriemodul nach einem der Ansprüche 1-3, wobei das Pufferelement (2) ferner einen dritten Begrenzungsteil (24) aufweist, wobei der dritte Begrenzungsteil (24) mit dem Hauptkörperteil (21) verbunden ist und aus dem Hauptkörperteil (21) in der zweiten Richtung (Y) herausragt, und wobei der dritte Begrenzungsteil (24) die entsprechende Batterie (1) in der dritten Richtung (Z) stützt.

5. Batteriemodul nach Anspruch 4, wobei
der dritte Begrenzungsteil (24) den gesamten Hauptkörperteil (21) in der ersten Richtung (X) überspannt und mit dem ersten Begrenzungsteil (22) und dem zweiten Begrenzungsteil (23) verbunden ist; oder
der dritte Begrenzungsteil (24) an beiden Enden des Hauptkörperteils (24) in der ersten Richtung (X) gebildet ist und der erste Begrenzungsteil (22) und der zweite Begrenzungsteil (23) entsprechend mit einem jeweiligen dritten Begrenzungsteil (24) verbunden sind.

6. Batteriemodul nach einem der Ansprüche 1-5, wobei
die Batterie (1) eine Elektrodenanordnung (11) und ein Gehäuse (12), das die Elektrodenanordnung (11) einhaust, umfasst;
das Gehäuse (12) mit einer ersten Auskehlung gebildet ist und ein Radius der ersten Auskehlung *R*₁ ist; und
eine Größe des ersten Begrenzungsteils (22) in der zweiten Richtung (Y) *H* ist und *R*₁ ≤ *H*.

7. Batteriemodul nach Anspruch 6, wobei ein Übergang zwischen dem ersten Begrenzungsteil (22) und dem Hauptkörperteil (21) mit einer zweiten Auskehlung gebildet ist und ein Radius der zweiten Auskehlung *R*₂ ist und *R*₁ ≤ *R*₂.

8. Batteriemodul nach einem der Ansprüche 4-7, wobei
die Batterie (1) die Elektrodenanordnung (11) und das Gehäuse (12), das die Elektrodenanordnung (11) einhaust, umfasst;
die Elektrodenanordnung (11) einen Körperteil (111), einen ersten Eckteil (112) und einen zweiten Eckteil (113) aufweist,
wobei der erste Eckteil (112) und der zweite Eckteil (113) entsprechend auf beiden Seiten des Körperteils (111) in der ersten Richtung (X) befindlich sind und wobei der erste Eckteil (112) und der zweite Eckteil (113) mit dem Körperteil (111) verbunden sind und aus dem Körperteil (111) in der ersten Richtung (X) herausragen;
ein Abstand zwischen einem Übergang des ersten Eckteils (112) und dem Körperteil (111) und einer äußeren Seitenoberfläche entsprechend dem Gehäuse (12) in der ersten Richtung (X) *L*₁ ist und ein Abstand zwischen einem Übergang des zweiten Eckteils (113) und dem Körperteil (111) und der äußeren Seitenoberfläche entsprechend dem Gehäuse (12) in der ersten Richtung (X) *L*₂ ist; der Hauptkörperteil (21) des Pufferelements (2) eine innere umlaufende Oberfläche aufweist, die die Öffnung (S) einschließt, und wobei die innere umlaufende Oberfläche eine erste Oberfläche (21A) und eine zweite Oberfläche (21B) umfasst, und wobei die erste Oberfläche (21A) und die zweite Oberfläche (21B) einander gegenüberliegend in der ersten Richtung (X) angeordnet sind; und die erste Oberfläche (21A) nahe dem ersten Begrenzungsteil (22) ist und ein Abstand zwischen der ersten Oberfläche (21A) und dem ersten Begrenzungsteil (22) in der ersten Richtung (X) *W*₁ ist, die zweite Oberfläche (21B) nahe dem zweiten Begrenzungsteil (23) ist und ein Abstand zwischen der zweiten Oberfläche (21B) und dem zweiten Begrenzungsteil (23) in der ersten Richtung (X) *W*₁ ist und *W*₁ ≤ *L*₁, *W*₂ ≤ *L*₂.

9. Batteriemodul nach Anspruch 8, wobei
ein Abstand zwischen dem Körperteil (111) und einer unteren Oberfläche des Gehäuses (12) in der dritten Richtung (Z) *L*₃ ist und ein Abstand zwischen dem Körperteil (111) und einer oberen Oberfläche des Gehäuses (12) in der dritten Richtung (Z) *L*₄ ist; die innere umlaufende Oberfläche ferner eine dritte Oberfläche (21C) und eine vierte Oberfläche (21D) umfasst und wobei die dritte Oberfläche (21C) und die vierte Oberfläche (21D) einander gegenüberliegend in der dritten Richtung (Z) angeordnet sind; und
die dritte Oberfläche (21C) nahe dem dritten Begrenzungsteil (24) ist und ein Abstand zwischen der dritten Oberfläche (21C) und dem dritten Begrenzungsteil (24) in der dritten Richtung (Z) *W*₃ ist, ein Abstand zwischen der vierten Oberfläche (21D) und einer oberen Oberfläche des Hauptkörperteils (21) in der dritten Richtung (Z) *W*₄ ist und *W*₃ ≤ *L*₃, *W*₄ ≤ *L*₄*.*

10. Batteriemodul nach einem der Ansprüche 6-9, wobei die Elektrodenanordnung (11) eine gewalzte Elektrodenanordnung ist.

11. Batteriemodul nach Anspruch 1, wobei das Pufferelement (2) aus einem harten Material gefertigt ist.

12. Batteriemodul nach Anspruch 1, wobei eine Oberfläche jeder Batterie (1), die zur Öffnung (S) zeigt, mit einem Haftklebstoff (T) versehen ist, und wobei der Haftklebstoff (T) an einer Innenseite des Hauptkörperteils (21) befindlich und nahe am Hauptkörperteil (21) angeordnet ist.

13. Batteriepack, umfassend einen Kastenkörper und das Batteriemodul nach einem der Ansprüche 1-12.

14. Fahrzeug, umfassend das Batteriemodul nach einem der Ansprüche 1-12, und wobei das Batteriemodul ausgelegt ist zum Zuführen elektrischer Energie zum Fahrzeug.

## Revendications

1. Module de batteries, comprenant une pluralité de batteries (1), un élément tampon (2) et un élément isolant (3) ;
la pluralité de batteries (1) étant agencées côte à côte suivant une deuxième direction (Y) ;
l'élément tampon (2) étant agencé entre deux batteries (1) adjacentes et possédant une partie formant corps principal (21), une première partie de limitation (22) et une deuxième partie de limitation (23) ;
la partie formant corps principal (21) étant pourvue d'une ouverture (S) traversante suivant la deuxième direction (Y), la première partie de limitation (22) et la deuxième partie de limitation (23) étant situées respectivement aux deux extrémités de la partie formant corps principal (21) dans une première direction (X), et étant agencées espacées de l'ouverture (S), et la première partie de limitation (22) et la deuxième partie de limitation (23) étant liées à la partie formant corps principal (21) et faisant saillie depuis la partie formant corps principal (21) dans la deuxième direction (Y) ; et
une batterie (1) faisant face à l'ouverture (S) dans la deuxième direction (Y) et venant buter contre la partie formant corps principal (21), et la batterie (1) étant située entre la première partie de limitation (22) et la deuxième partie de limitation (23) dans la première direction (X) ;
**caractérisé en ce que**
l'élément isolant (3) est agencé des deux côtés de la pluralité de batteries (1) dans la première direction (X) et adhère à la pluralité de batteries (1) ; et
une taille de la batterie (1) dans la deuxième direction (Y) est notée *W*, une taille de la première partie de limitation (22) dans la deuxième direction (Y) est notée *H,* et *H* ≤ *W* /20.

2. Module de batteries selon la revendication 1,
la première partie de limitation (22) s'étendant sur toute la partie formant corps principal (21) dans une troisième direction (Z) ; et/ou
la deuxième partie de limitation (23) s'étendant sur toute la partie formant corps principal (21) dans la troisième direction (Z) .

3. Module de batteries selon l'une quelconque des revendications 1 à 2, la première partie de limitation (22) et la deuxième partie de limitation (23) étant agencées de manière à être diamétralement opposées l'une par rapport à l'autre ou agencées en décalage dans la troisième direction (Z).

4. Module de batteries selon l'une quelconque des revendications 1 à 3, l'élément tampon (2) possédant en outre une troisième partie de limitation (24), la troisième partie de limitation (24) étant liée à la partie formant corps principal (21) et faisant saillie depuis la partie formant corps principal (21) dans la deuxième direction (Y), et la troisième partie de limitation (24) supportant la batterie (1) correspondante dans la troisième direction (Z).

5. Module de batteries selon la revendication 4,
la troisième partie de limitation (24) s'étendant sur toute la partie formant corps principal (21) dans la première direction (X) et étant liée à la première partie de limitation (22) et à la deuxième partie de limitation (23) ; ou
la troisième partie de limitation (24) étant formée aux deux extrémités de la partie formant corps principal (21) dans la première direction (X), et la première partie de limitation (22) et la deuxième partie de limitation (23) étant respectivement liées à une troisième partie de limitation (24) correspondante.

6. Module de batteries selon l'une quelconque des revendications 1 à 5,
la batterie (1) comprenant un ensemble d'électrodes (11) et un boîtier (12) accueillant l'ensemble d'électrodes (11) ;
le boîtier (12) étant doté d'un premier congé, et un rayon du premier congé étant noté *R*₁ ; et
une taille de la première partie de limitation (22) dans la deuxième direction (Y) étant notée *H,* et *R*₁ ≤ *H*.

7. Module de batteries selon la revendication 6, une jonction entre la première partie de limitation (22) et la partie formant corps principal (21) étant dotée d'un deuxième congé, et un rayon du deuxième congé étant noté *R*₂, et *R*₁ ≤ *R*₂.

8. Module de batteries selon l'une quelconque des revendications 4 à 7,
la batterie (1) comprenant l'ensemble d'électrodes (11) et le boîtier (12) accueillant l'ensemble d'électrodes (11) ;
l'ensemble d'électrodes (11) possédant une partie formant corps (111), une première partie formant coin (112) et une deuxième partie formant coin (113), la première partie formant coin (112) et la deuxième partie formant coin (113) étant situées respectivement des deux côtés de la partie formant corps (111) dans la première direction (X), et la première partie formant coin (112) et la deuxième partie formant coin (113) étant liées à la partie formant corps (111) et faisant saillie depuis la partie formant corps (111) dans la première direction (X) ;
une distance entre une jonction de la première partie formant coin (112) et de la partie formant corps (111) et une surface latérale extérieure correspondant au boîtier (12) dans la première direction (X) étant notée *L*₁, et une distance entre une jonction de la deuxième partie formant coin (113) et de la partie formant corps (111) et la surface latérale extérieure correspondant au boîtier (12) dans la première direction (X) étant notée *L*₂;
la partie formant corps principal (21) de l'élément tampon (2) possédant une surface périphérique intérieure renfermant l'ouverture (S), et la surface périphérique intérieure comprenant une première surface (21A) et une deuxième surface (21B), et la première surface (21A) et la deuxième surface (21B) étant agencées en regard l'une de l'autre dans la première direction (X) ; et
la première surface (21A) étant proche de la première partie de limitation (22) et une distance entre la première surface (21A) et la première partie de limitation (22) dans la première direction (X) étant notée *W*₁, la deuxième surface (21B) étant proche de la deuxième partie de limitation (23) et une distance entre la deuxième surface (21B) et la deuxième partie de limitation (23) dans la première direction (X) étant notée *W*₂, et *W₁* ≤ *L*₁*, W*₂ ≤ *L*₂.

9. Module de batteries selon la revendication 8,
une distance entre la partie formant corps (111) et une surface inférieure du boîtier (12) dans la troisième direction (Z) étant notée *L*₃, et une distance entre la partie formant corps (111) et une surface supérieure du boîtier (12) dans la troisième direction (Z) étant notée *L*₄;
la surface périphérique intérieure comprenant en outre une troisième surface (21C) et une quatrième surface (21D), et la troisième surface (21C) et la quatrième surface (21D) étant agencées en regard l'une de l'autre dans la troisième direction (Z) ; et
la troisième surface (21C) étant proche de la troisième partie de limitation (24) et une distance entre la troisième surface (21C) et la troisième partie de limitation (24) dans la troisième direction (Z) étant notée *W*₃, une distance entre la quatrième surface (21D) et une surface supérieure de la partie formant corps principal (21) dans la troisième direction (Z) étant notée *W*₄, et *W*₃ ≤ *L*₃, *W*₄ ≤ *L*₄.

10. Module de batteries selon l'une quelconque des revendications 6 à 9, l'ensemble d'électrodes (11) étant un ensemble d'électrodes enroulé.

11. Module de batteries selon la revendication 1, l'élément tampon (2) étant constitué d'un matériau dur.

12. Module de batteries selon la revendication 1, une surface de chaque batterie (1) faisant face à l'ouverture (S) étant pourvue d'une colle adhésive (T), et la colle adhésive (T) étant située d'un côté intérieur de la partie formant corps principal (21) et étant agencée à proximité de la partie formant corps principal (21).

13. Bloc-batterie comprenant un corps formant coffre et le module de batteries selon l'une quelconque des revendications 1 à 12.

14. Véhicule comprenant le module de batteries selon l'une quelconque des revendications 1 à 12, et le module de batteries étant configuré pour alimenter le véhicule en énergie électrique.
